# EUROPEAN PATENT APPLICATION

(11) **EP 4 603 179 A1**
(43) Date of publication of application: **20.08.2025**
(21) Application number: 23884854.3
(22) Date of filing: 30.10.2023
(51) Int. Cl.: B01J 10/00, B01J 19/24, C10L 3/10

(54) **HEAT-CONDUCTING ASSEMBLY FOR HYDRATION REACTION, HYDRATE REACTOR, AND HYDRATE REACTION SYSTEM**

(30) Priority: 31.10.2022 CN 202211347070
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: LIU, Mingrui, Dalian, Liaoning 116045 (CN); LI, Zunzhao, Dalian, Liaoning 116045 (CN); XUE, Qian, Dalian, Liaoning 116045 (CN); SUN, Xiaozhe, Dalian, Liaoning 116045 (CN); DING, Kai, Dalian, Liaoning 116045 (CN)
(74) Representative: Hoffmann Eitle
(86) International application number: PCT/CN2023/127796
(87) International publication number: WO 2024/093924

(57) **Abstract**

A hydrate reactor (1) and a system using the reactor (1). The reactor (1) comprises: a cylinder (100), which is of a vertical pressure container structure, the lower portion of the cylinder being provided with a gas-liquid mixture inlet (101), the upper portion of the cylinder (100) being provided with a hydrate outlet (102), and the bottom portion of the cylinder (100) being provided with a liquid outlet (103), and a heat-conducting assembly (110) arranged in the middle of the cylinder (100), the heat-conducting assembly (110) comprising a plurality of six-sided honeycomb hole channels having obliquely arranged wall surfaces, and in the process that a gas-liquid mixture passes through the honeycomb hole channels and forms a hydrate, hydration heat being conducted and dissipated in the oblique wall surfaces of the honeycomb hole channels. By arranging the heat-conducting assembly (110) in the reactor, the gas-liquid contact time can be effectively increased, thereby facilitating rapid conduction of heat during hydrate formation, and thus improving the hydrate formation efficiency.

## Description

### CROSS REFERENCE TO RELATED APPLICATION

The present application claims for the benefits of the Chinese Patent Application No. 202211347070.5 filed on Oct. 31, 2022, the content of which is incorporated herein by reference.

### FIELD

The present disclosure relates to the technical field of hydrate preparation, in particular to a heat-conducting assembly, a hydrate reactor and a system using the reactor.

### BACKGROUND

Hydrates are a kind of clathrate crystal complexes, in which water molecules form clathrate crystals by means of hydrogen bonding, and gas molecules are enclosed in crystal lattices. Carbon dioxide hydrates are special inclusion compounds formed by water and carbon dioxide at a low temperature and a high pressure, and each cubic meter of carbon dioxide hydrates can store 160-180 cubic meters of carbon dioxide gas. Natural gas hydrates are a kind of ice compounds formed by methane molecules wrapped by water molecules, also known as combustible ice, and can be generated at 0°C under 30 atmospheres. Under standard conditions, one unit volume of natural gas hydrates can produce up to 164 unit volumes of methane gas when decomposed. Therefore, natural gas hydrates are a kind of important potential future resources.

Hydrates have a wide range of applications, but a low temperature and a high pressure are required for their reaction conditions. Therefore, overcoming the problem of slow formation of hydrates and improving the formation rate of hydrates are the key to successful application of hydrate technology. At present, the most common methods for promoting rapid formation of hydrates in laboratories can be categorized into physical methods and chemical methods. In the formation process of various gas hydrates, physical enhancing methods are dominant promoting methods, and spraying is a method that has high reliability, high controllability, excellent effect and low energy consumption among the physical enhancing methods. However, the most severe disadvantage of the spraying method is that a hydrate layer is formed on the surfaces of liquid droplets in the falling process of the liquid droplets, and formation heat is accumulated inside the liquid droplets, consequently further formation of hydrates is inhibited. Hydrate reactors commonly used in the prior art form a mist after gas-liquid mixing, and a metal baffle plate is placed opposite to the nozzle to transfer and diffuse the formation heat. However, viewed from the experimental results, the cooling effect of this approach is not obvious, and the liquid drops from the baffle plate quickly, consequently the gas-liquid contact time is short and the hydrate formation rate is low.

Therefore, there is an urgent need for a hydrate reactor and a system using the hydrate reactor to overcome the problems of short gas-liquid contact time and slow heat conduction during hydrate formation in the prior art.

The information disclosed in this section is only intended to make the background of the present disclosure understood better, and may not be deemed as acknowledging or implying in any form that the information constitutes the prior art well known to those having ordinary skills in the art.

### SUMMARY

An object of the present disclosure is to provide a hydrate reactor and a system using the hydrate reactor. By arranging a heat-conducting assembly in the reactor, the gas-liquid contact time can be effectively increased, which is more conducive to rapid conduction of hydrate formation heat, thereby improve hydrate formation efficiency.

Another object of the present disclosure is to provide a hydrate reaction system, which can realize switching between a liquid supply line and a flushing line after a certain period of hydration reaction, so as to flush the heat-conducting assembly in the hydrate reactor with the liquid discharged from the bottom of the hydrate reactor.

To achieve the above objects, according to a first aspect of the present disclosure, the present disclosure provides a hydrate reactor, which comprises: a cylinder, which is of a vertical pressure container structure, wherein a lower portion of the cylinder is provided with a gas-liquid mixture inlet, an upper portion of the cylinder is provided with a hydrate outlet, and a bottom portion of the cylinder is provided with a liquid outlet; and a heat-conducting assembly arranged in the middle of the cylinder, wherein the heat-conducting assembly comprises a plurality of six-sided honeycomb hole channels having obliquely arranged wall surfaces, and, in the process that a gas-liquid mixture passes through the honeycomb hole channels and forms a hydrate, hydration heat is conducted and dissipated in the oblique wall surfaces of the honeycomb hole channels.

Furthermore, in the above technical scheme, the heat-conducting assembly may comprise multiple stages of honeycomb plates arranged from top to bottom, and each stage of honeycomb plate is provided with the six-sided honeycomb hole channels.

Furthermore, in the above technical scheme, the inclination directions of the wall surfaces of honeycomb hole channels on any two adjacent stages of honeycomb plates in the multiple stages of honeycomb plates are different from each other, to form a broken-line flow direction of the gas-liquid mixture.

Furthermore, in the above technical scheme, the multiple stages of honeycomb plates may include a first-stage honeycomb plate, a second-stage honeycomb plate and a third-stage honeycomb plate that are arranged sequentially from bottom to top; the thicknesses of the honeycomb plates and the apertures of the honeycomb hole channels on the honeycomb plates are increased stage by stage; and the inclination angles of the wall surfaces of the honeycomb hole channels are decreased stage by stage.

Furthermore, in the above technical scheme, the thickness of the first-grade honeycomb plate may be set to 5-10 cm; and the inclination angles of the wall surfaces of the first-stage honeycomb hole channels may be set to 10-45 degrees. The thickness of the second-stage honeycomb plate may be set to 5-15 cm; and the inclination angles of the wall surfaces of the second-stage honeycomb hole channels may be set to 30-60 degrees. The thickness of the third-stage honeycomb plate may be set to 8-25 cm; and the inclination angles of the wall surfaces of the third-stage honeycomb hole channels may be set to 45-80 degrees.

Furthermore, in the above technical scheme, the hydrate reactor may further comprise: a rotary jet arranged between the gas-liquid mixture inlet and the heat-conducting assembly; the rotary jet is of a combined structure of impeller and orifice plate, wherein the impeller is driven to rotate by the gas pressure in the gas-liquid mixture, and the gas is spirally cut into small bubbles and jetted through the orifice plate.

Furthermore, in the above technical scheme, a liquid jet inlet may be arranged above the heat-conducting assembly, and the liquid jet is used to receive the liquid discharged from the bottom of the cylinder and flush the heat-conducting assembly after a certain period of hydration reaction.

According to a second aspect of the present disclosure, the present disclosure provides a hydrate reaction system, which comprises the hydrate reactor described in any of the above technical schemes, and further comprises: a discharged liquid backflushing unit configured to pressurize the liquid discharged from the bottom of the cylinder of the hydrate reactor and then pump the discharged liquid to a buffer tank, so that the discharged liquid is jetted through the liquid jet to the heat-conducting assembly in the cylinder for flushing the heat-conducting assembly after a certain period of hydration reaction.

Furthermore, in the above technical scheme, the system further comprises: a gas supply unit configured to provide high-pressure gas supply required for the hydration reaction; a liquid supply unit configured to provide cooling water supply and a hydrate promoter in an initial stage of the hydration reaction; and a gas-liquid mixing unit configured to receive the high-pressure gas supply, the cooling water supply and the hydrate promoter, mixes them and sends a resultant mixture to a feed inlet of the hydrate reactor.

Furthermore, in the above technical scheme, the liquid supply unit comprises: a low-temperature thermotank configured to provide a circulating coolant for cooling the water supply and the hydrate promoter; and a heat exchanger configured to exchange heat between the coolant and the water supply and the hydrate promoter to obtain a cooling liquid required for the hydration reaction.

Furthermore, in the above technical scheme, a liquid circulating pump used by the discharged liquid backflushing unit is configured to selectively drive two circulation loops, namely, a liquid supply line and a flushing line; wherein the liquid supply line is a circulating loop between the liquid outlet and a feed inlet of the cylinder, and the flushing line is a circulating loop between the liquid outlet and an inlet of the liquid jet.

Furthermore, in the above technical scheme, the system may further comprise: a gas circulating pump configured to pump a gas from a gas outlet at the top of the cylinder of the hydrate reactor after the hydration reaction back to the gas supply line for use in gas circulation.

Furthermore, in the above technical scheme, the gas outlet is provided with a safety valve and a pressure sensor for maintaining a required high-pressure environment in the hydrate reactor.

In addition, the present disclosure provides a heat-conducting assembly for hydration reaction, which comprises a plurality of honeycomb plates stacked in a vertical direction, wherein each honeycomb plate is provided with a plurality of honeycomb hole channels, and the honeycomb hole channels extend in a direction that is inclined at an angle with respect to the vertical direction; in any two adjacent honeycomb plates, the inclination direction of the honeycomb hole channels of the lower honeycomb plate is different from the inclination direction of the honeycomb hole channels of the upper honeycomb plate.

In some embodiments, in a projection plane perpendicular to the stacking direction of the plurality of honeycomb plates, an included angle between extending paths of the honeycomb hole channels of adjacent honeycomb plates is 90-180 degrees.

In some embodiments, in any two adjacent honeycomb plates, the inclination direction of the honeycomb hole channels of the lower honeycomb plate is opposite to the inclination direction of the honeycomb hole channels of the upper honeycomb plate.

In some embodiments, in any two adjacent honeycomb plates, the thickness of the lower honeycomb plate is smaller than the thickness of the upper honeycomb plate; and/or the apertures of lower honeycomb hole channels are smaller than the apertures of the upper honeycomb hole channels.

In some embodiments, in any two adjacent honeycomb plates, the inclination angles of the honeycomb hole channels of the lower honeycomb plate are respectively greater than the inclination angles of the honeycomb hole channels of the upper honeycomb plate.

In some embodiments, the heat-conducting assembly is provided with a first-stage honeycomb plate, a second-stage honeycomb plate and a third-stage honeycomb plate that are arranged from bottom to top, and a ratio of the inner diameter of the honeycomb hole channels of the first-stage honeycomb plate to the overall diameter is 1:20-50; a ratio of the inner diameter of the honeycomb hole channels of the second-stage honeycomb plate to the overall diameter is 1:18-40; and a ratio of the inner diameter of the honeycomb hole channels of the third-stage honeycomb plate to the overall diameter is 1:15-30.

In some embodiments, the thickness of the first-stage honeycomb plate is 5-10 cm, and the inclination angles of the honeycomb hole channels of the first-stage honeycomb plate are 10-45 degrees; the thickness of the second-stage honeycomb plate is 5-15 cm, and the inclination angles of the honeycomb hole channels of the second-stage honeycomb plate are 30-60 degrees; the thickness of the third-stage honeycomb plate is 8-25 cm, and the inclination angles of the honeycomb hole channels of the third-stage honeycomb plate are 45-80 degrees.

In some embodiments, the plurality of honeycomb plates are arranged at intervals.

In another aspect, the present disclosure provides a hydrate reactor, which comprises:
a cylinder, which is of a vertical pressure container structure, wherein a lower portion of the cylinder is provided with a gas-liquid mixture inlet, an upper portion of the cylinder is provided with a hydrate outlet, and a bottom portion of the cylinder is provided with a liquid outlet; and
the heat-conducting assembly for hydration reaction described in the above scheme, which is arranged in the middle of the cylinder.

In some embodiments, the hydrate reactor further comprises: a rotary jet arranged between the gas-liquid mixture inlet and the heat-conducting assembly; the rotary jet comprising an orifice plate and a rotatable impeller arranged below the orifice plate, wherein the impeller can rotate to cut a gas into small bubbles and form a jet stream through the orifice plate.

In some embodiments, the rotary jet comprises a housing arranged on the orifice plate and a feed pipe connected to the housing.

In some embodiments, a part of the side wall of the cylinder above the heat-conducting assembly is provided with a liquid jet inlet, and the liquid jet is configured to receive a liquid discharged from the bottom of the cylinder and flush the heat-conducting assembly.

In addition, the present disclosure further provides a hydrate reaction system, which comprises the hydrate reactor described in the above scheme, and further comprises:
a discharged liquid backflushing unit configured to pressurize the liquid discharged from the bottom of the cylinder of the hydrate reactor and then transfer the discharged liquid to a buffer tank, so that the discharged liquid is jetted through the liquid jet to the heat-conducting assembly in the cylinder for flushing the heat-conducting assembly after a certain period of hydration reaction.

In some embodiments, the system further comprises:
a gas supply unit configured to provide high-pressure gas supply required for the hydration reaction;
a liquid supply unit configured to provide cooling water supply and a hydrate promoter in an initial stage of the hydration reaction; and
a gas-liquid mixing unit configured to receive the high-pressure gas supply, the cooling water supply and the hydrate promoter, mixes them and sends a resultant mixture to a feed inlet of the hydrate reactor.

In some embodiments, the liquid supply unit comprises:
a low-temperature thermotank configured to provide a circulating coolant for cooling the water supply and the hydrate promoter; and
a heat exchanger configured to exchange heat between the coolant and the water supply and the hydrate promoter to obtain a cooling liquid required for the hydration reaction.

In some embodiments, a liquid circulating pump used by the discharged liquid backflushing unit is configured to selectively drive two circulation loops, namely, a liquid supply line and a flushing line; wherein the liquid supply line is a circulating loop between the liquid outlet and a feed inlet of the cylinder, and the flushing line is a circulating loop between the liquid outlet and an inlet of the liquid jet.

In some embodiments, the system further comprises:
a gas circulating pump configured to pump a gas from a gas outlet at the top of the cylinder of the hydrate reactor after the hydration reaction back to the gas supply line for use in gas circulation.

In some embodiments, the gas outlet is provided with a safety valve and a pressure sensor for maintaining a required high-pressure environment in the hydrate reactor.

Compared with the prior art, the present disclosure attains the following beneficial effects:
1) According to the present disclosure, the hydration heat is conducted through the honeycomb hole channels of the heat-conducting assembly, and the heat in the six-sided structures of the honeycomb hole channels is unbalanced, so that the hydration heat generated on one surface is conducted to the other four surfaces, thereby the heat is gradually dispersed and transferred out; thus, for the same heat, the area of heat exchange between the honeycomb hole channels and the liquid is increased, while the amount of heat exchanged on unit area in unit time is reduced, and the heat exchange efficiency can be improved;
2) With the three-stage honeycomb plate design in the present disclosure, especially with the scheme that the thicknesses of the honeycomb plates and the apertures of the honeycomb hole channels on the honeycomb plates are increased stage by stage and the inclination angle of the wall surfaces of the honeycomb hole channels are decreased stage by stage, the overall structure of the heat-conducting assembly presents a three-stage variable-angle folded line structure, in which the feed gas impacts the inclined wall surface of the first-stage honeycomb plate first, and then forms crystal nuclei; then, under the gas impact, the small crystal nuclei are driven to collide with the inclined wall surfaces of the second-stage honeycomb plate and the third-stage honeycomb plate respectively and climb further, so that the gas-liquid contact time is increased by means of the wall surfaces that are lengthened stage by stage, thereby more sufficient time is provided for the crystals to grow; the gradually increasing inner diameters of the honeycomb hole channels and the gradually decreasing angles with respect to the vertical direction are beneficial to the passing of the crystals, thereby blockage of the hole channels by the grown crystals can be effectively prevented;
3) The rotary jet in the present disclosure pushes the impeller by means of the gas pressure, so as to improve the spiral force of the gas, and then the gas is jetted in the form of small bubbles through the dispersed jet holes; since the hydrate formation rate is higher when the gas-liquid disturbance is more severe in the hydration reaction, the induction time of crystal nuclei can be effectively shortened with the increase of the gas-liquid mass transfer rate; in view that hydrate nucleation mainly occurs at the gas-liquid interface, an area favorable for gas preconcentration is formed by utilizing the high gas concentration at the interface; by using the rotary jet and the heat-conducting assembly in the present disclosure in combination, the hydrate nucleation rate can be improved by increasing disturbance and instantaneous gas concentration, thereby hydrate formation is further promoted; the inclined inner wall of the multiple stages of honeycomb plates attain a retardation effect on the jetted gas in the area, and the instantaneous concentration is increased, which is beneficial to hydrate nucleation;
4) The hydrate reaction system in the present disclosure can effectively flush the heat-conducting assembly through the flushing line formed by the discharged liquid backflushing unit; by arranging a buffer tank in the discharged liquid backflushing unit, the liquid can be temporarily stored to decrease the liquid level in the hydrate reactor; after the hydrate reacts for a certain period, the valve on the liquid supply line is closed, and the valve on the flushing line is opened, so that the liquid enters the flushing line; at that point, the internal pressure in the cylinder of the reactor is reduced owing to the discharge of the liquid, and the temperature is slightly increased owing to the pressurization and jetting of the liquid; the hydrate attached to the surface of the heat-conducting assembly is reversely detached and broken under the action of the liquid jetted to the heat-conducting assembly, thereby the flushing efficiency and effect are effectively improved.

The above description is only a summary of the technical scheme of the present disclosure. Hereunder one or more preferred embodiments will be presented and described with reference to the accompanying drawings in detail, in order to make the technical means of the present disclosure understood more clearly and implemented on the basis of the description, and make the above-mentioned and other objects, technical features and advantages of the present disclosure understood more easily.

### BRIEF DESCRITION OF THE DRAWINGS

Fig. 1 is a schematic diagram of the connection of the hydrate reaction system in the present disclosure;
Fig. 2-A is a schematic view of the appearance of the hydrate reactor in the present disclosure;
Fig. 2-B is a schematic sectional view of the hydrate reactor in the present disclosure;
Fig. 3-A is a schematic sectional view of the inlet end face of the first-stage honeycomb plate in the heat-conducting assembly in the present disclosure;
Fig. 3-B is a schematic sectional view of the inlet end face of the second-stage honeycomb plate in the heat-conducting assembly in the present disclosure;
Fig. 3-C is a schematic sectional view of the inlet end face of the third-stage honeycomb plate in the heat-conducting assembly in the present disclosure;
Fig. 4 is a partial perspective view of the heat-conducting assembly in the present disclosure;
Fig. 5-A is an external perspective view of the rotary jet in the present disclosure; and
Fig. 5-B is a schematic internal sectional view of the rotary jet in the present disclosure.

Reference Numbers:
1 - hydrate reactor, 100 - cylinder, 101 - feed inlet, 102 - hydrate outlet, 103 - liquid outlet, 104 - jet interface, 105 - gas outlet, 106 - safety valve and pressure sensor, 110 - heat-conducting assembly, 111 - first-stage honeycomb plate, 1111 - first-stage honeycomb hole channel, 1112 - wall surface of first-stage honeycomb hole channel, 112 - second-stage honeycomb plate, 1121 - second-stage honeycomb hole channel, 1122 - wall surface of second-stage honeycomb hole channel, 113 - third-stage honeycomb plate, 1131 - third-stage honeycomb hole channel, 1132 - wall surface of third-stage honeycomb hole channel, 120 - rotary jet, 121 - impeller, 122 - jet hole, 123 - feed pipe;
2 - gas source, 3 - gas-liquid mixing unit, 4 - heat exchanger, 5 - liquid circulating pump, 6 - liquid jet, 7 - hydrate slurry tank, 8 - liquid outlet valve, 9 - flushing line valve, 10 - liquid supply line valve, 11 - first gas valve, 12 - water pump, 13 - outlet flow valve, 14 - low temperature thermotank, 15 - second gas valve, 16 - gas circulating pump, 17 - third gas valve, 18 - buffer tank, 19 - water storage tank.

### DETAILED DESCRIPTION

Some specific embodiments of the present disclosure will be detailed with reference to the accompanying drawings. However, it may be understood that the scope of protection of the present disclosure is not limited to those embodiments.

Unless otherwise expressly stated, throughout the specification and claims, the term "comprise" or "include" or their variants such as "comprising" or "including" shall be understood as including the enumerated elements or components, without excluding other elements or components.

In this document, for the convenience of description, spatially relative terms such as "under", "below", "bottom", "on", "above", and "top", etc., may be used to describe the relationship between one element or feature and another element or feature in the drawings. It may be understood that the spatially relative terms are intended to include different directions of the objects in use or operation other than the directions depicted in the drawings. For example, if an object in a drawing is turned upside down, an element described as "below" or "under" other elements or features will be oriented "above" the elements or features. Therefore, the exemplary term "below" may include "below" and "above" directions. Objects may also have other orientations (rotated by 90 degrees or other orientations), and the spatially relative terms used herein may be interpreted accordingly.

In this document, the terms "first", "second", etc. are used to distinguish two different elements or parts, rather than to define a specific position or relative relationship. In other words, in some embodiments, the terms "first", "second", etc. may also be interchanged with each other.

### Example 1

In this scheme, a heat-conducting assembly for hydration reaction is provided. The heat-conducting assembly for hydration reaction comprises a plurality of honeycomb plates stacked in a vertical direction, wherein each honeycomb plate is provided with a plurality of honeycomb hole channels, and the honeycomb hole channels extend in a direction that is inclined at an angle with respect to the vertical direction; in any two adjacent honeycomb plates, the inclination direction of the honeycomb hole channels of the lower honeycomb plate is different from the inclination direction of the honeycomb hole channels of the upper honeycomb plate.

The cross sections of the honeycomb hole channels may be in a variety of shapes, such as a triangular shape, a quadrilateral shape, a circular shape, or a hexagonal shape, etc., preferably are in a hexagonal shape.

Adjacent honeycomb plates may be closely fitted to each other, or may be spaced from each other.

In a projection plane perpendicular to the stacking direction of the plurality of honeycomb plates, an included angle between extending paths of the honeycomb hole channels of adjacent honeycomb plates is 90-180 degrees. The projection of the extension direction of the honeycomb hole channels in the projection plane perpendicular to the stacking direction is a straight line, and the included angle between the projection lines of honeycomb hole channels of adjacent honeycomb plates is 90-180 degrees.

In any two adjacent honeycomb plates, the inclination direction of the honeycomb hole channels of the lower honeycomb plate is opposite to the inclination direction of the honeycomb hole channels of the upper honeycomb plate. That is to say, the included angle between the projection lines of the honeycomb hole channels is 180 degrees, and the hole channels of the plurality of honeycomb plates form broken-line flow channels.

In any two adjacent honeycomb plates, the thickness of the lower honeycomb plate is smaller than the thickness of the upper honeycomb plate; and/or the apertures of lower honeycomb hole channels are smaller than the apertures of the upper honeycomb hole channels. The gas-liquid mixture flows from bottom to top, and the inner diameters of the hole channels are increased sequentially from bottom to top to reduce the resistance to the gas-liquid mixture; the thicknesses of the honeycomb plates are increased sequentially from top to bottom, so as to increase the retention time appropriately.

In any two adjacent honeycomb plates, the inclination angles of the honeycomb hole channels of the lower honeycomb plate are respectively greater than the inclination angles of the honeycomb hole channels of the upper honeycomb plate. The inclination angles are decreased sequentially to reduce the resistance to the gas-liquid mixture.

The heat-conducting assembly is provided with a first-stage honeycomb plate 111, a second-stage honeycomb plate 112 and a third-stage honeycomb plate 113 that are arranged from bottom to top, and a ratio of the inner diameter of the honeycomb hole channels of the first-stage honeycomb plate 111 to the overall diameter is 1:20-50; a ratio of the inner diameter of the honeycomb hole channels of the second-stage honeycomb plate 112 to the overall diameter is 1:18-40; and a ratio of the inner diameter of the honeycomb hole channels of the third-stage honeycomb plate 113 to the overall diameter is 1:15-30.

The thickness of the first-stage honeycomb plate 111 is 5-10 cm, and the inclination angles of the honeycomb hole channels 1111 of the first-stage honeycomb plate 111 are 10-45 degrees; the thickness of the second-stage honeycomb plate 112 is 5-15 cm, and the inclination angles of the honeycomb hole channels 1121 of the second-stage honeycomb plate 112 are 30-60 degrees; the thickness of the third-stage honeycomb plate 113 is 8-25 cm, and the inclination angles of the honeycomb hole channels 1131 of the third-stage honeycomb plate 113 are 45-80 degrees.

The plurality of honeycomb plates are arranged at intervals. For example, they are arranged at equal intervals. Of course, the plurality of honeycomb plates may be arranged at different intervals.

### Example 2

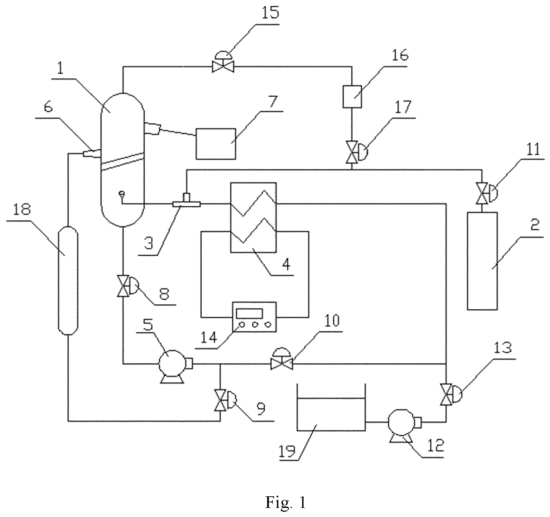

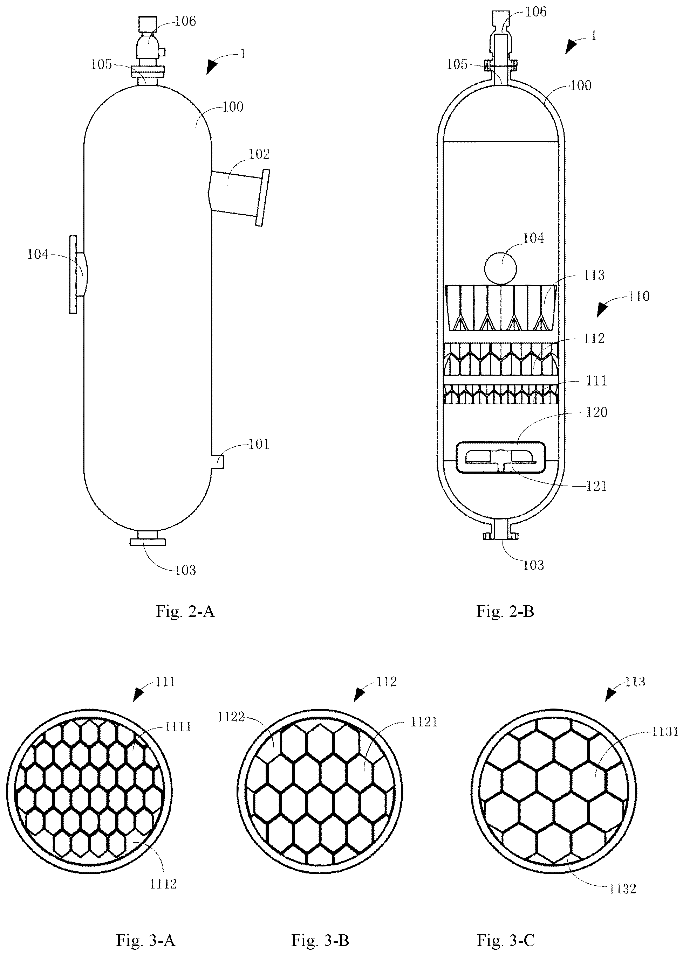

As shown in Figs. 2-A and 2-B, in this example, a hydrate reactor 1 is provided for preparing a hydrate of a single-component gas or a hybrid-component gas. The hydrate reactor 1 at least comprises a cylinder 100 and a heat-conducting assembly 110. The cylinder 100 is of a vertical pressure container structure, and a lower portion of the cylinder is provided with a gas-liquid mixture inlet 101. An upper portion of the cylinder is provided with a hydrate outlet 102, which is inclined downward from the horizontal direction and is connected to an external pipeline via a welding neck flange, so that the prepared hydrate can be discharged into a hydrate slurry tank 7 conveniently (see Fig. 1). The bottom of the cylinder is provided with a liquid outlet 103, which is connected to an external pipeline through a welding neck flange. In this example, the top of the cylinder is further provided with a gas outlet 105, and a safety valve and a pressure sensor 106 are provided at the gas outlet 105, and the safety valve is hermetically connected via a welding neck flange. The heat-conducting assembly 110 is arranged in the middle of the cylinder 100, and can be integrally welded in the cylinder. The outer circumferential surface of the heat-conducting assembly 110 is engaged with the inner circumferential surface of the cylinder 100 to enable the heat-conducting assembly 110 to transfer heat to the cylinder 100 and then the heat is dissipated out. The heat-conducting assembly 110 comprises a plurality of six-sided honeycomb hole channels having obliquely arranged wall surfaces, and, in the process that a gas-liquid mixture passes through the honeycomb hole channels and forms a hydrate, hydration heat is conducted and dissipated in the oblique wall surfaces of the honeycomb hole channels.

According to the present disclosure, with the heat-conducting assembly 110 arranged in the cylinder 100, the conduction of the hydration heat generated in the reaction can be effectively improved. Through research, the inventor has found that heat conduction on the side wall surfaces of the hole channels of the honeycomb structures and radiant heat exchange between the inner surfaces of the honeycombs are the main approaches of heat transfer inside the honeycombs. The inventor has further proved through experiments that the six-sided structures of the honeycombs have larger metal-gas contact area in unit space than existing baffle plates, thereby effectively disperse the hydration heat on unit area; each surface of the honeycomb is connected with the other four surfaces, and the six surfaces of the honeycomb contact with different amounts of heat owing to the honeycomb hole channels with inclined wall surfaces; therefore, the hydration heat generated on one surface is conducted to the other four surfaces owing to heat imbalance, and the heat is gradually dispersed and transferred out; thus, for the same heat, the heat exchange area between the honeycombs and the liquid is increased, while the amount of heat exchanged on unit area in unit time is reduced, thereby the heat exchange efficiency can be improved.

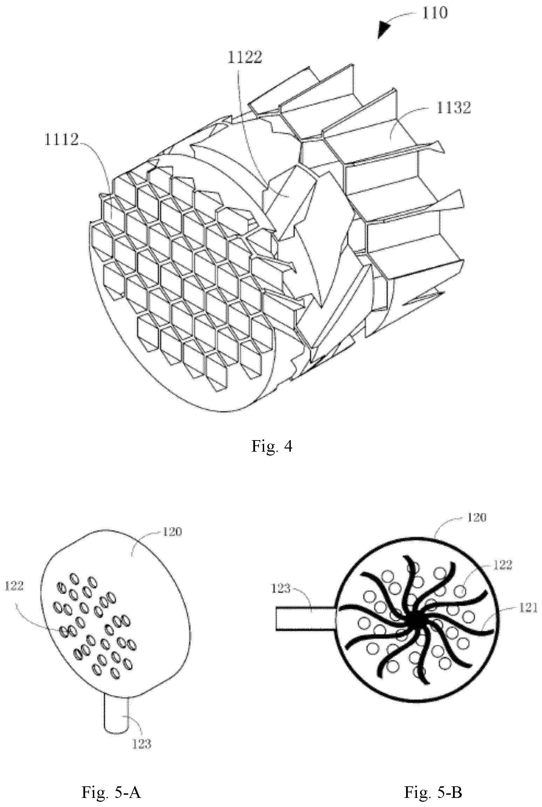

Furthermore, as shown in Fig. 2-B, preferably but not limitingly, the heat-conducting assembly in this example comprises multiple stages of honeycomb plates arranged at intervals from bottom to top, and each stage of honeycomb plate is provided with the six-sided honeycomb hole channels. The inclination directions of the wall surfaces of honeycomb hole channels on any two adjacent stages of honeycomb plates in the multiple stages of honeycomb plates are different from each other (see Fig. 4), to form a broken-line flow direction of the gas-liquid mixture. Furthermore, the multiple stages of honeycomb plates in this example may be divided into three stages, including a first-stage honeycomb plate 111, a second-stage honeycomb plate 112 and a third-stage honeycomb plate 113 that are arranged sequentially from bottom to top. Preferably but not limitingly, the thicknesses of the honeycomb plates and the apertures of the honeycomb hole channels on the honeycomb plates are increased stage by stage (see Fig. 2-B and Figs 3-A to 3-C); and the inclination angles of the wall surfaces of the honeycomb hole channels are decreased stage by stage (see Fig.4). Specifically, the thickness of the first-stage honeycomb plate 111 may be set to 5-10 cm; and the inclination angles of the wall surfaces 1112 of the first-stage honeycomb hole channels may be set to 10-45 degrees. The thickness of the second-stage honeycomb plate 112 may be set to 5-15 cm; and the inclination angles of the wall surfaces 1122 of the second-stage honeycomb hole channels may be set to 30-60 degrees. The thickness of the third-stage honeycomb plate 113 may be set to 8-25 cm; and the inclination angles of the wall surfaces 1132 of the third-stage honeycomb hole channels may be set to 45-80 degrees.

In this example, the gas-liquid mixture is fed through a feed inlet 101 at the bottom. In the hydration reaction, the liquid (i.e., cooling water supply and hydrate promoter) has fully entered the cylinder and immersed the heat-conducting assembly 110. After the hydration reaction, the hydrate floats on the liquid surface and is discharged through a hydrate outlet 102. At the same time, the gas-liquid mixture is fed into the feed inlet 101 at the bottom of the cylinder continuously, thereby the hydrate is prepared continuously. With the three-stage honeycomb plate design in this example, especially with the scheme that the thicknesses of the honeycomb plates and the apertures of the honeycomb hole channels on the honeycomb plates are increased stage by stage and the inclination angles of the wall surfaces of the honeycomb hole channels are decreased stage by stage, the overall structure of the heat-conducting assembly presents a three-stage variable-angle folded line structure, in which the feed gas impacts the inclined wall surface of the first-stage honeycomb plate 111 first, and then forms crystal nuclei; then, under the gas impact, the small crystal nuclei are driven to collide with the inclined wall surfaces of the second-stage honeycomb plate 112 and the third-stage honeycomb plate 113 respectively and climb further, so that the gas-liquid contact time is increased by means of the wall surfaces that are increased stage by stage, thereby more sufficient time is provided for the crystals to grow. The gradually increasing inner diameters of the honeycomb hole channels and the gradually decreasing angles with respect to the vertical direction are beneficial to the passing of the crystals, thereby blockage of the hole channels by the grown crystals can be effectively prevented.

Furthermore, as shown in Fig. 2-B and Figs. 5-A and 5-B, preferably but not limitingly, the hydrate reactor in this example may further comprise a rotary jet 120, which is arranged between the gas-liquid mixture inlet 101 and the heat-conducting assembly 110. The rotary jet 120 has an overall cylindrical hollow structure, and is a combined structure of an impeller and an orifice plate; the impeller 121 is arranged inside the housing, and a side of the rotary jet 120 facing the top part of Fig. 2-B is an orifice plate, which has jet holes 122 distributed in a dispersed form thereon; a feed pipe 123 is connected with the feed inlet 101 of the cylinder 100. The impeller 121 can be driven to rotate by the gas pressure in the gas-liquid mixture, and the gas is spirally cut into small bubbles and jetted through the orifice plate; of course, alternatively the impeller 121 may be driven by external power, for example, by a motor.

The rotary jet in this example pushes the impeller by means of the gas pressure, so as to improve the spiral force of the gas, and then the gas is jetted in the form of small bubbles through the dispersed jet holes; since the hydrate formation rate is higher when the gas-liquid disturbance is more severe in the hydration reaction, the induction time of crystal nuclei can be effectively shortened with the increase of the gas-liquid mass transfer rate. Therefore, based on the heat-conducting assembly in this example, the hydrate nucleation rate can be improved by increasing the disturbance and instantaneous gas concentration by means of the rotary jet, thereby hydrate formation is further promoted. The hydrate nucleation mainly happens at the gas-liquid interface, and an area favorable for gas preconcentration is formed by means of the high gas concentration at the interface; the inclined inner walls of the multiple stages of honeycomb plates attain a retardation effect on the gas in the area, and the instantaneous concentration is increased, which is beneficial to hydrate nucleation.

Furthermore, as shown in Figs. 2-A and 2-B, a liquid jet inlet 104 may be arranged above the side wall of the cylinder 100 and the heat-conducting assembly 110, and the liquid jet 6 (see Fig. 1) is used to receive the liquid discharged from the bottom of the cylinder and flush the heat-conducting assembly 110 after a certain period of hydration reaction. As the liquid discharged from the bottom works through the booster pump (i.e., the liquid circulating pump 5) and the liquid jet 6, the temperature is slightly increased, and, under the action of pressure, temperature increase and jetting force, the hydrate attached to the surface of the heat-conducting assembly 110 can be reversely detached and broken, thereby a flushing effect is attained.

### Example 3

As shown in Fig. 1, in this example, a hydrate reaction system is provided. The hydrate reaction system comprises the hydrate reactor in Example 1, and further comprises a discharged liquid backflushing unit, which comprises: a liquid outlet valve 8, a liquid circulating pump 5, a flushing line valve 9, a buffer tank 18 and a liquid jet 6; a circulating loop (i.e., a flushing line) with the cylinder of the reactor 1 is formed through these devices and a pipeline. The discharged liquid backflushing unit pressurizes the liquid discharged from the bottom of the cylinder of the hydrate reactor and then transfers the discharged liquid to the buffer tank 18, so that the discharged liquid is jetted through the liquid jet 6 to the heat-conducting assembly in the cylinder for flushing the heat-conducting assembly after a certain period of hydration reaction. Specifically, as shown in Fig. 1, the liquid circulating pump 5 is connected with a liquid outlet 103 at the bottom of the hydrate reactor through the liquid outlet valve 8. The two ends of the buffer tank 18 are respectively connected with the inlet of the liquid jet 6 and the outlet of the liquid circulating pump 5, and the outlet of the liquid circulating pump is provided with the flushing line valve 9. The diameter of the buffer tank 18 may be set to 35-45 cm, and the pipe diameters of the water inlet and the water outlet at the two ends are the same; the buffer tank 18 can be used for temporarily storing the liquid to decrease the liquid level in the hydrate reactor 1. The outlet of the liquid jet 6 is connected to a jet interface 104 on a side of the hydrate reactor (see Fig. 2-A). Through the flushing line formed by the liquid discharge backwashing unit in this example, the heat-conducting assembly in the hydrate reactor can be flushed while the pressure in the hydrate reactor can be decreased.

Furthermore, as shown in Fig. 1, the system in this example further comprises a gas supply unit, a liquid supply unit and a gas-liquid mixing unit. The gas supply unit comprises a gas source 2 and a first gas valve 11 for providing high-pressure gas supply required for the hydration reaction. The gas source 2 is connected to a gas inlet of the gas-liquid mixing unit 3 through the first gas valve 11 and a pipeline to provide gas at certain concentration and pressure for the hydrate reactor in the present disclosure. The liquid supply unit comprises a water storage tank 19, a water pump 12, and an outlet flow valve 13 for providing cooling water supply and a hydrate promoter in an initial stage of the hydration reaction. The gas-liquid mixing unit has a gas-liquid mixing chamber, and the liquid pressurized by the water pump 12 (i.e., cooling water supply and hydrate promoter) enters the gas-liquid mixing chamber together with the gas and is jetted into the feed inlet of the cylinder of the hydration reactor at a high speed.

Furthermore, as shown in Fig. 1, the liquid supply unit further comprises a low-temperature thermotank 14 and a heat exchanger 4. The low-temperature thermotank 14 is used to provide a circulating coolant for cooling the water supply and the hydrate promoter. The heat exchanger 4 is used to exchange heat between the coolant and the water supply and the hydrate promoter to obtain a cooling liquid required for the hydration reaction. Specifically, a hot material line in the heat exchanger is connected to the liquid outlet at the bottom of the hydrate reactor and the liquid inlet of the gas-liquid mixing unit 3, and the cold material line in the heat exchanger is connected to the low-temperature thermotank 14, so that the liquid in the pipeline is cooled by the circulating coolant. Another circulation loop (i.e., a liquid supply line) is formed between the liquid outlet and the feed inlet of the hydrate reactor in this example, the two circulation loops formed by the liquid supply line and the flushing line are driven by the same liquid circulating pump, and either circulation loop can be selectively activated by means of a corresponding valve, which is to say, a liquid supply line valve 10 is opened during normal hydration reaction, while the flushing line valve 9 is opened when the heat-conducting assembly is to be flushed.

Furthermore, as shown in Fig. 1, the system in this example further comprises a gas circulating pump 16, which is used to pump the gas from the gas outlet at the top of the cylinder of the hydrate reactor back to the gas supply line after the hydration reaction, and the lines at two ends of the gas circulating pump 16 are respectively provided with a second gas valve 15 and a third gas valve 17 for controlling the gas circulation.

The system in this example can effectively flush the heat-conducting assembly through the flushing line formed by the discharged liquid backflushing unit. By providing the buffer tank in the discharged liquid backflushing unit, the liquid can be temporarily stored to decrease the liquid level in the hydrate reactor. After the hydrate reacts for a certain period, the valve on the liquid supply line is closed, and the valve on the flushing line is opened, so that the liquid enters the flushing line; at that point, the internal pressure in the cylinder of the reactor is reduced owing to the discharge of the liquid, and the temperature is slightly increased owing to the pressurization and jetting of the liquid; the hydrate attached to the surface of the heat-conducting assembly is reversely detached and broken under the action of the liquid jetted to the heat-conducting assembly, thereby the flushing efficiency and effect are effectively improved.

### Example 4

In this example, the hydrate reactor described in Example 3 and a system using the reactor are used to carry out hydrate reaction. The thickness of the first-stage honeycomb plate of the hydrate reactor is 5 cm; and the inclination angles of the wall surfaces of the first-stage honeycomb hole channels can be set to 15 degrees. The thickness of the second-stage honeycomb plate may be set to 10 cm; and the inclination angles of the wall surfaces of the second-stage honeycomb hole channels may be set to 30 degrees. The thickness of the third-stage honeycomb plate may be set to 20 cm; and the inclination angles of the wall surfaces of the third-stage honeycomb hole channels may be set to 45 degrees. The reaction pressure is 3 MPa, and the reaction temperature is 10°C.

### Comparative Example 1

The heat-conducting assembly in the reactor described in Example 4 is replaced with a baffle plate arrange at an inclination angle of 60 degrees, and is applied to the system described in Example 3 for hydrate reaction. The reaction pressure is 3 MPa, and the reaction temperature is 10°C.

**Table 1 - Reaction Data**

| Name | Reaction pressure / MPa | Reaction temperature / °C | Rotation speed of rotary jet / rpm | Induction time / s |
|---|---|---|---|---|
| Example 3 | 3 | 10 | 600 | 10 |
| Comparative Example 1 | 3 | 10 | 600 | 65 |

The above description of the specific embodiments of the present disclosure are for the purpose of explanation and illustration. The description is not intended to limit the present disclosure to the disclosed specific forms; moreover, it is obvious that various modifications and alternations can be made in light of the above teaching. The exemplary embodiments are selected and described in order to explain the specific principle of the present disclosure and its practical application, so as to enable those skilled in the art to implement and utilize the exemplary embodiments of the present disclosure and make various choices and changes. Any simple modification, equivalent variation or refinement made to the above exemplary embodiments shall be deemed as falling in the scope of protection of the present disclosure.

## Claims

1. A heat-conducting assembly for hydration reaction, comprising a plurality of honeycomb plates stacked in a vertical direction, wherein each honeycomb plate is provided with a plurality of honeycomb hole channels, and the honeycomb hole channels extend in a direction that is inclined at an angle with respect to the vertical direction; in any two adjacent honeycomb plates, the inclination direction of the honeycomb hole channels of the lower honeycomb plate is different from the inclination direction of the honeycomb hole channels of the upper honeycomb plate.

2. The heat-conducting assembly for hydration reaction of claim 1, wherein in a projection plane perpendicular to the stacking direction of the plurality of honeycomb plates, an included angle between extending paths of the honeycomb hole channels of adjacent honeycomb plates is 90-180 degrees.

3. The heat-conducting assembly for hydration reaction of claim 1, wherein in any two adjacent honeycomb plates, the inclination direction of the honeycomb hole channels of the lower honeycomb plate is opposite to the inclination direction of the honeycomb hole channels of the upper honeycomb plate.

4. The heat-conducting assembly for hydration reaction of claim 1, wherein in any two adjacent honeycomb plates, the thickness of a lower honeycomb plate is smaller than the thickness of an upper honeycomb plate; and the apertures of a lower honeycomb hole channels are smaller than the apertures of an upper honeycomb hole channels.

5. The heat-conducting assembly for hydration reaction of claim 1, wherein in any two adjacent honeycomb plates, the inclination angles of the honeycomb hole channels of a lower honeycomb plate are greater than the inclination angles of the honeycomb hole channels of an upper honeycomb plate.

6. The heat-conducting assembly for hydration reaction of claim 1, wherein the heat-conducting assembly is provided with a first-stage honeycomb plate, a second-stage honeycomb plate and a third-stage honeycomb plate that are arranged from bottom to top, and a ratio of the inner diameter of the honeycomb hole channels of the first-stage honeycomb plate to the overall diameter is 1:20-50; a ratio of the inner diameter of the honeycomb hole channels of the second-stage honeycomb plate to the overall diameter is 1:18-40; and a ratio of the inner diameter of the honeycomb hole channels of the third-stage honeycomb plate to the overall diameter is 1:15-30.

7. The heat-conducting assembly for hydration reaction of claim 6, wherein the thickness of the first-stage honeycomb plate is 5-10 cm, and the inclination angles of the honeycomb hole channels of the first-stage honeycomb plate are 10-45 degrees; the thickness of the second-stage honeycomb plate is 5-15 cm, and the inclination angles of the honeycomb hole channels of the second-stage honeycomb plate are 30-60 degrees; the thickness of the third-stage honeycomb plate is 8-25 cm, and the inclination angles of the honeycomb hole channels of the third-stage honeycomb plate are 45-80 degrees.

8. The heat-conducting assembly for hydration reaction of claim 1, wherein the plurality of honeycomb plates are arranged at intervals.

9. A hydrate reactor, comprising:
a cylinder, which is of a vertical pressure container structure, wherein a lower portion of the cylinder is provided with a gas-liquid mixture inlet, an upper portion of the cylinder is provided with a hydrate outlet, and a bottom portion of the cylinder is provided with a liquid outlet; and
the heat-conducting assembly for hydration reaction of any of claims 1-8, which is arranged in the middle of the cylinder.

10. The hydrate reactor of claim 9, further comprising:
a rotary jet arranged between the gas-liquid mixture inlet and the heat-conducting assembly; the rotary jet comprising an orifice plate and a rotatable impeller arranged below the orifice plate, wherein the impeller is confiured to rotate to cut a gas into small bubbles and form a jet stream through the orifice plate.

11. The hydrate reactor of claim 10, wherein the rotary jet comprises a housing arranged on the orifice plate and a feed pipe connected to the housing.

12. The hydrate reactor of claim 9, wherein a part of the side wall of the cylinder above the heat-conducting assembly is provided with a liquid jet inlet, and the liquid jet is configured to receive a liquid discharged from the bottom of the cylinder and flush the heat-conducting assembly.

13. A hydrate reaction system comprising the hydrate reactor of any of claims 9-12, further comprising:
a discharged liquid backflushing unit configured to pressurize the liquid discharged from the bottom of the cylinder of the hydrate reactor and then transfer the discharged liquid to a buffer tank, so that the discharged liquid is jetted through the liquid jet to the heat-conducting assembly in the cylinder for flushing the heat-conducting assembly after a certain period of hydration reaction.

14. The hydrate reaction system of claim 13, further comprising:
a gas supply unit configured to provide high-pressure gas supply required for the hydration reaction;
a liquid supply unit configured to provide cooling water supply and a hydrate promoter in an initial stage of the hydration reaction; and
a gas-liquid mixing unit configured to receive and mix the high-pressure gas supply, the cooling water supply and the hydrate promoter and send a resultant mixture to a feed inlet of the hydrate reactor.

15. The hydrate reaction system of claim 14, wherein the liquid supply unit comprises:
a low-temperature thermotank configured to provide a circulating coolant for cooling the water supply and the hydrate promoter; and
a heat exchanger configured to exchange heat between the coolant and the water supply and the hydrate promoter to obtain a cooling liquid required for the hydration reaction.

16. The hydrate reaction system of claim 13, wherein a liquid circulating pump used in the discharged liquid backflushing unit is configured to selectively drive two circulation loops, wherein the two circulation loops is a liquid supply line and a flushing line; wherein the liquid supply line is a circulating loop between the liquid outlet and a feed inlet of the cylinder, and the flushing line is a circulating loop between the liquid outlet and an inlet of the liquid jet.

17. The hydrate reaction system of claim 13, further comprising:
a gas circulating pump configured to pump a gas from a gas outlet at the top of the cylinder of the hydrate reactor after the hydration reaction back to the gas supply line for use in gas circulation.

18. The hydrate reaction system of claim 17, wherein the gas outlet is provided with a safety valve and a pressure sensor for maintaining a required high-pressure environment in the hydrate reactor.
